# EUROPEAN PATENT SPECIFICATION

(11) **EP 3 941 103 B1**
(45) Date of publication and mention of the grant of the patent: **22.11.2023**
(21) Application number: 20186534.2
(22) Date of filing: 17.07.2020
(51) Int. Cl.: H04W 24/02, H04W 24/08, H04W 84/12, H04W 36/06, H04W 36/08

(54) **METHOD FOR EVALUATING THE QUALITY OF A CHANNEL OPERABLE BY A WIFI ACCESS POINT FOR ESTABLISHING A WIFI CONNECTION WITH A COMMUNICATION DEVICE, CORRESPONDING DEVICE, COMPUTER PROGRAM PRODUCT AND COMPUTER-READABLE CARRIER MEDIUM**
VERFAHREN ZUR BEURTEILUNG DER QUALITÄT EINES DURCH EINEN WIFI-ZUGANGSPUNKT BETREIBBAREN KANALS ZUR HERSTELLUNG EINER WIFI-VERBINDUNG MIT EINER KOMMUNIKATIONSVORRICHTUNG, ZUGEHÖRIGE VORRICHTUNG, COMPUTERPROGRAMMPRODUKT UND COMPUTERLESBARES TRÄGERMEDIUM
PROCÉDÉ D'ÉVALUATION DE LA QUALITÉ D'UN CANAL FONCTIONNANT À L'AIDE D'UN POINT D'ACCÈS WIFI POUR ÉTABLIR UNE CONNEXION WIFI AVEC UN DISPOSITIF DE COMMUNICATION, DISPOSITIF CORRESPONDANT, PRODUIT DE PROGRAMME INFORMATIQUE ET SUPPORT LISIBLE PAR ORDINATEUR

(43) Date of publication of application: 19.01.2022
(73) Proprietor: THOMSON LICENSING, 35510 Cesson-Sévigné (FR)
(72) Inventor: JEANNE, Ludovic, 35576 CESSON-SEVIGNE (FR); BASKAR, Nethaji, 35576 CESSON-SEVIGNE (FR); GRENIER, Frédéric, 35576 CESSON-SEVIGNE (FR)
(74) Representative: Vidon Brevets & Stratégie

(56) References cited:
- EP-A1- 2 775 765
- US-A1- 2018 152 848
- US-A1- 2019 335 335
- US-B1- 9 204 452
- ZELJKOVIC ENSAR ET AL: "Proactive Access Point Driven Handovers in IEEE 802.11 Networks", 2018 14TH INTERNATIONAL CONFERENCE ON NETWORK AND SERVICE MANAGEMENT (CNSM), IFIP, 5 November 2018 (2018-11-05), pages 261-267, XP033483362, [retrieved on 2018-12-20]

## Description

### Field of the disclosure

The present disclosure relates generally to the field of wireless networks based on IEEE 802.11 standards. More particularly, the present disclosure relates to a technique that allows performing Wi-Fi diagnostic, and to some extent troubleshooting, at a communication device connected to a WiFi access point.

### Background

The present section is intended to introduce the reader to various aspects of art, which may be related to various aspects of the present disclosure that are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

The simplicity of use of wireless networks relying on IEEE 802.11 standards, allowing connecting a device to a network with no cable to run, has made them become very popular: WiFi networks are now widely deployed in a very large number of local area networks (LAN) and home area networks (HAN). More and more devices, including general public consumer devices such as smartphones, tablets, set-top boxes, television sets, are now provided with a WiFi interface, and the volume of data being exchanged on WiFi networks is continuously increasing.

In this context, the quality of the WiFi connection has become a key point, and there is thus a need to be able to monitor WiFi quality of service.

To this end, some approaches rely on full Wi-Fi network monitoring with deep channel inspection and history creation implemented at a Wi-Fi router level, i.e. at the access point level. When properly implemented, such solutions usually prove to be efficient when it comes to monitoring WiFi network characteristics. However, they are usually not among the primary target features when designing a WiFi router, and their integration within such a device has a significant cost. As a result, they often stay under development. In addition, these solutions are WiFi router centralized solutions, i.e. access point centric, meaning that they are not always adapted to identify specific issues that can concern a particular WiFi client device within the network. For example, since most of WiFi clients are devices designed to be mobile devices (e.g. smartphones, tablets, laptop computers), these solutions usually focus on monitoring characteristics that provide information related to roaming or roaming issues, at the expenses of other characteristics.

Nonetheless, some WiFi clients which are not necessarily mobile devices may be severely impacted by some variation of the quality of received signal. This is particularly true in systems which require real time transmission and/or reception of data. For example, in a wireless local area or home area network, a communication device such as a set-top box (STB) connected to a television set may need to receive real-time data from another device. Real time data may for example be TV program or streamed video content which is provided by an operator or a content provider (i.e. Verizon^{™}, T-Mobile^{™}, Orange^{™}, Deutsche Telekom^{™}, Netflix^{™} etc.). Real time data may also be video and/or audio representing execution of software somewhere in another network and coming from one or several servers, such as for example streamed data originating from the execution of a multiplayer game in the cloud. More generally, one can consider real time data as data which are transmitted (and received) with time constraint and order constraint, both of these constraints determining the possibility of transmitting and/or receiving real-time data in acceptable conditions. Good reception quality may be critical in such wireless communication devices designed to fulfill specific needs.

Thus, an interest exists in device-centric approach, i.e. in monitoring, diagnostic and troubleshooting techniques which are not implemented at an access point level, but instead at a communication device connected to an access point.

However, one can observe that a lot of communication devices provide no information at all on that front. When information is provided regarding WiFi link status at a given communication device, it is in most cases limited to the display of the measurement of the received signal strength indicator (RSSI). Yet, the sole strength of a received signal may not be enough to determine whether a given communication device may be able to properly receive real-time data in a network, the quality of a WiFi link being highly dependent of several criteria. Finally, in rare cases where more information is provided, it usually consists in displaying a snapshot of the WiFi connection state, basically a succession of raw measurements of complex characteristics which are incomprehensible and/or uninterpretable to most people, even experienced users. Besides, information provided, when available, is limited to characteristics associated with the WiFi channel currently used for the WiFi link between the communication device and the access point. Thus, no way is offered to compare, with respect to the quality of the WiFi link at the communication device, how the current channel ranks among other available channels within the used WiFi frequency band.

It would hence be desirable to provide a technique that would avoid at least some of these drawbacks of the prior art, and that would notably allow providing a more accurate, more readable, and easier to use way to evaluate, at a communication device connected to an access point level, the quality of a WiFi link operated on a current channel and/or an expected quality for the WiFi link if operated on another channel.

US 2018/152848 A1 discloses a method and apparatus for a radio resources communication management system to adapt to context and usage of communication channels in relation to users having a plurality of available radiofrequency communication devices. EP 2 775 765 A1 discloses a method for transmitting whitespace map information from a first station to a second station.

### Summary

The invention is defined in the claims. The following is provided for illustrative purposes.

According to the present disclosure, a method for evaluating the quality of a channel operable by a WiFi access point for establishing a WiFi connection with a communication device is proposed. The method is implemented by the communication device, which is already connected to the access point on a given channel, called a current channel, within a predetermined WiFi frequency band. The method includes a first phase for computing a score representative of a channel quality for at least one WiFi channel, called a scanned channel, within the predetermined WiFi frequency band, the first phase including at least one iteration of: obtaining the scanned channel bandwidth and a maximum effective isotropic radiated power associated with the scanned channel; determining a number of neighboring access points operating in the scanned channel; estimating a neighbor airtime occupancy for the scanned channel; and computing a score for the scanned channel, as a function of the obtained bandwidth, the obtained maximum effective isotropic radiated power, the determined number of neighboring access points, and the estimated neighbor airtime occupancy. The technique thus allows obtaining an accurate indicator of the ability of a communication device to transmit and/or receive data, and more particularly real-time data, in good conditions, depending on the channel operated on the access point to which the communication device is connected.

According to an embodiment, determining the number of neighboring access points using the scanned channel and estimating the neighbor airtime occupancy for the scanned channel are performed from pieces of data delivered by a WiFi driver during a monitoring period of the scanned channel.

According to a particular feature of this embodiment, the estimated neighbor airtime occupancy is equal to the sum of an overlapping basic service set value and an interference value obtained or inferred from the pieces of data delivered by the WiFi driver during the monitoring period of the scanned channel.

According to a complementary feature of this embodiment, estimating the neighbor airtime occupancy for the scanned channel further includes: analyzing a channel usage history data structure stored within the communication device to identify at least one previous connection of the communication device to the access point on the scanned channel; retrieve an average neighbor airtime occupancy associated with the at least one previous connection; and setting the estimated neighbor airtime occupancy for the scanned channel to the maximum value between the average neighbor airtime occupancy retrieved from the channel usage history data structure and the estimated neighbor airtime occupancy computed from the pieces of data delivered by the WiFi driver during the monitoring period of the scanned channel.

According to an embodiment, the scanned channel is an extended-bandwidth channel formed by bonding together a plurality of adjacent channels of the predetermined WiFi frequency band and; the number of neighboring access points associated with the scanned channel is determined as the sum of the number of neighboring access points associated with each channel of the plurality of adjacent channels bonded to form the scanned channel; and the neighbor airtime occupancy associated with the scanned channel is estimated as the maximum value among the estimated neighbor airtime occupancy values associated with each channel of the plurality of adjacent channels bonded to form the scanned channel.

According to an embodiment, computing the score for the scanned channel includes applying a score penalty to the score if the determined number of neighboring access points is above a predetermined threshold number, said score penalty being proportional to the determined number of neighboring access points.

According to an embodiment, computing the score for the scanned channel further includes taking into account a maximum effective isotropic radiated power associated with the current channel and a current received signal strength indicator representative of the power of the signal received by the communication device on the current channel.

According to an embodiment a score is computed for each channel of the predetermined WiFi frequency band, including the current channel.

According to an embodiment, a score representative of the quality of the current channel and a score representative of the quality of at least one other channel within the predetermined WiFi frequency band, called a candidate channel, are computed in the first phase, and the method includes a second phase for evaluating a benefit of a channel switch, the second phase including: determining the channel having the best score, called the best candidate channel, among the at least one candidate channel; calculating a score ratio between the best candidate channel score and the current channel score; and delivering a piece of data representative of a benefit or not to use the best candidate channel instead of the current channel for the connection between the communication device and the access point, as a function of the calculated score ratio.

According to a particular feature of this embodiment, delivering a piece of data representative of a benefit or not to use the best candidate channel instead of the current channel further takes into account at least one characteristic associated with the connection between the communication device and the access point on the current channel.

According to a complementary feature of this embodiment, the at least one characteristic belongs to the group including: an average data rate measured for the connection between the communication device and the access point on the current channel; an average neighbor airtime occupancy for the current channel; and an average quality of service associated with the connection between the communication device and the access point on the current channel.

According to an embodiment, the communication device has a plurality of WiFi antennas, and the second phase further includes delivering a piece of data representative of a probability of non-optimal positioning of the communication device and/or of a probability of hardware issue on the communication device, as a function of pieces of data representative of a set of received signal strength indicator values measured at each WiFi antenna of the communication device.

The present disclosure also relates to a communication device connected to a WiFi access point on a given WiFi channel, called a current channel, within a predetermined WiFi frequency band, the communication device including at least one processor configured for computing a score representative of a channel quality for at least one WiFi channel, called a scanned channel, within the predetermined WiFi frequency band, by: obtaining the scanned channel bandwidth and a maximum effective isotropic radiated power associated with the scanned channel; determining a number of neighboring access points operating in the scanned channel; estimating a neighbor airtime occupancy for the scanned channel; and computing a score for the scanned channel, as a function of the obtained bandwidth, the obtained maximum effective isotropic radiated power, the determined number of neighboring access points, and the estimated neighbor airtime occupancy.

According to one implementation, the different steps of the method for evaluating the quality of a channel operable by a WiFi access point as described here above are implemented by one or more software programs or software module programs including software instructions intended for execution by at least one data processor of a communication device connected to the access point through a current channel.

Thus, another aspect of the present disclosure pertains to at least one computer program product downloadable from a communication network and/or recorded on a medium readable by a computer and/or executable by a processor, including program code instructions for implementing the method as described above. More particularly, this computer program product includes instructions to command the execution of the different steps of a method for evaluating the quality of a channel operable by a WiFi access point for establishing a WiFi connection with a communication device, as mentioned here above.

This program can use any programming language whatsoever and be in the form of source code, object code or intermediate code between source code and object code, such as in a partially compiled form or any other desirable form whatsoever.

According to one embodiment, the methods/apparatus may be implemented by means of software and/or hardware components. In this respect, the term "module" or "unit" can correspond in this document equally well to a software component and to a hardware component or to a set of hardware and software components.

A software component corresponds to one or more computer programs, one or more sub-programs of a program or more generally to any element of a program or a piece of software capable of implementing a function or a set of functions as described here below for the module concerned. Such a software component is executed by a data processor of a physical entity (terminal, server, etc.) and is capable of accessing hardware resources of this physical entity (memories, recording media, communications buses, input/output electronic boards, user interfaces, etc.).

In the same way, a hardware component corresponds to any element of a hardware unit capable of implementing a function or a set of functions as described here below for the module concerned. It can be a programmable hardware component or a component with an integrated processor for the execution of software, for example an integrated circuit, a smartcard, a memory card, an electronic board for the execution of firmware, etc.

In addition, the present disclosure also concerns a non-transitory computer-readable medium including a computer program product recorded thereon and capable of being run by a processor, including program code instructions for implementing the above-described method for evaluating the quality of a channel operable by a WiFi access point for establishing a WiFi connection with a communication device.

The computer readable storage medium as used herein is considered a non-transitory storage medium given the inherent capability to store the information therein as well as the inherent capability to provide retrieval of the information therefrom. A computer readable storage medium can be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present principles can be applied, is merely an illustrative and not exhaustive listing as is readily appreciated by one of ordinary skill in the art: a portable computer diskette; a hard disk; a read-only memory (ROM); an erasable programmable read-only memory (EPROM or Flash memory); a portable compact disc read-only memory (CD-ROM); an optical storage device; a magnetic storage device; or any suitable combination of the foregoing.

It is to be understood that both the foregoing general description and the following detailed description are exemplary and explanatory and are not restrictive of the disclosure, as claimed.

It must also be understood that references in the specification to "one embodiment" or "an embodiment", indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

### Brief description of the drawings

Embodiments of the present disclosure can be better understood with reference to the following description and drawings, given by way of example and not limiting the scope of protection, and in which:
**Figure 1** is a flow chart for illustrating the first phase of the proposed technique for evaluating the quality of a channel operable by a WiFi access point, according to an embodiment of the present disclosure;
**Figure 2a** shows an example of the determined number of neighboring access points, the estimated neighbor airtime occupancy and the computed quality score associated with some channels of a 5GHz WiFi frequency band, according to an embodiment of the present disclosure;
**Figure 2b** represents figure 2a legend;
**Figure 3** is a flow chart for illustrating the second phase of the proposed technique for evaluating the quality of a channel operable by a WiFi access point, according to an embodiment of the present disclosure;
**Figure 4** is a schematic block diagram illustrating an example of a communication device for evaluating the quality of a channel operable by a WiFi access point, according to an embodiment of the present disclosure.

The components in the figures are not necessarily to scale, emphasis instead being placed upon illustrating the principles of the disclosure.

### Detailed description

The present disclosure relates to a method for evaluating the quality of a channel operable by a WiFi access point for establishing a WiFi connection with a communication device. The method is implemented by a communication device, which is already connected to the WiFi access point through a WiFi channel, called a current channel throughout the present disclosure. The current channel belongs to a predetermined WiFi frequency band, such as for example the 2.4 GHz or the 5 GHz frequency band.

As already presented above, in relation with the background of the proposed technique, data transmission and/or reception conditions through a given WiFi channel may be impacted by several factors, and the sole received signal strength indicator (RSSI) at the communication device - although sometimes used as a kind of representation of the quality of the wireless link - may actually prove insufficient in many situations for correctly evaluating the quality of such a link. For example, the wireless neighborhood of the communication device includes the access point creating the wireless network to which the communication device is connected, but also includes other access points in the vicinity of the communication device. Such other access points, whose coverage overlaps with the used access point's coverage at a given signal level (for example -85 dBm or higher level), are referred to as neighboring access points. When operating on the same channel as the current access point, these neighboring access points are likely to perturb data transmission and/or reception at the communication device, due to airtime occupancy and interferences.

As it will be described more fully hereafter with reference to the accompanying figures, it is thus proposed in one embodiment of the present disclosure to provide an improved and more accurate way to evaluate the quality of a WiFi channel for establishing a WiFi connection with a communication device. This objective is reached, according to the disclosure, by computing a score representative of a channel quality for at least one WiFi channel operable by the access point to which the communication device is connected. According to an embodiment, the score is computed from the communication device perspective, i.e. it reflects the quality of a channel regarding transmission and reception conditions for the particular connection between a given communication device - the device implementing the proposed technique - and the access point. One can thus consider the proposed technique as a device-centric solution, in contrast to access point centric solutions sometimes existing in prior art. The computed scores may then be used for identifying another channel (i.e. a channel different than the current channel currently operated on the access point) likely to provide significant improvement of data transmission and reception conditions at the communication device, if operated by the access point. When computed for the current channel, the quality score (possibly along with other metrics) may also be used for performing WiFi diagnostic on the current channel, by allowing the identification of possible weaknesses or issues on the WiFi link and eventually providing recommendations for fixing them.

This disclosure may, however, be embodied in many alternate forms and should not be construed as limited to the embodiments set forth herein. Accordingly, while the disclosure is susceptible to various modifications and alternative forms, specific embodiments thereof are shown by way of example in the drawings and will herein be described in detail. It should be understood, however, that there is no intent to limit the disclosure to the particular forms disclosed, but on the contrary, the disclosure is to cover all modifications, equivalents, and alternatives falling within the scope of the disclosure as defined by the claims. In the drawings, like or similar elements are designated with identical reference signs throughout the several views thereof.

While not explicitly described, the present embodiments and variants may be employed in any combination or sub-combination.

As discussed above, the method is implemented by the communication device, which is further detailed in one embodiment later in this document, and which includes at least one processor adapted and configured for carrying out the phases and steps described hereafter.

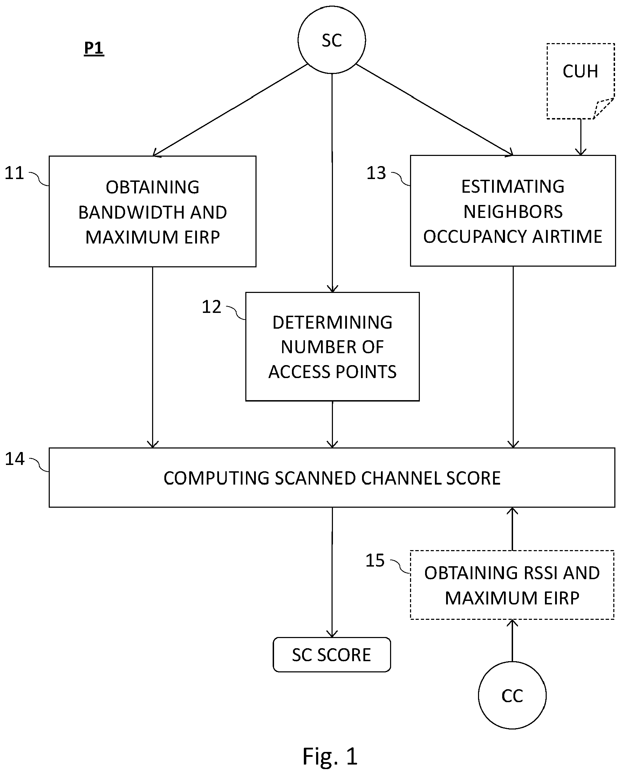

According to the general principle of the disclosure, the proposed technique includes a first phase for computing a score representative of a channel quality for at least one WiFi channel within the predetermined WiFi frequency band, called a scanned channel. The current channel may be one of the scanned channels, meaning that a score can be computed for the current channel itself. According to an embodiment, a score is computed for each channel of the predetermined WiFi frequency band, including the current channel and extended-bandwidth channels formed by channel bonding techniques, so that a channel quality scores map for the whole predetermined WiFi frequency band is obtained. The first phase is illustrated on the flow chart depicted on **figure 1****,** in an embodiment of the disclosure. Such first phase P1 includes at least one iteration of the steps described hereafter, allowing computing a quality score for at least one scanned channel SC of the predetermined WiFi frequency band.

At step 11, the communication device obtains the bandwidth of the scanned channel SC and the maximum effective isotropic radiated power (EIPR) associated with the scanned channel SC. The maximum effective isotropic radiated power is obtained directly from the knowledge of the scanned channel, since it is defined by local regulations that allow some well-identified channels to transmit at higher powers. For example, in Europe, the 5 GHz WiFi frequency band is divided into 20 MHz bandwidth channels (numbered 36, 40, 44, 48, 52, 56, 60, 64, 100, 104, 108, 112, 116, 120, 124, 128, 132, 136, 140) which may be bonded to form 40 MHz and 80 MHz bandwidth channels. According to European regulations, the maximum effective isotropic radiated power allowed for channels 36 to 64 is 23 dBm, and the maximum effective isotropic radiated power allowed for channels 100 to 140 is 30 dBm.

A determination of the number of neighboring access points operating in the scanned channel SC and an estimation of the neighbor airtime occupancy for the scanned channel SC are respectively implemented at steps 12 and 13, which are further detailed later in the document. According to an embodiment, these operations are performed from pieces of data delivered by a WiFi driver during a monitoring period of the scanned channel SC. The WiFi driver is for example included in the communication device itself, or in another device in the network, such as a WiFi router creating the access point to which the communication device is connected. Inasmuch as the monitoring of the scanned channel SC is likely to perturb data reception through the current channel CC on the communication device, and given the fact that a plurality of scanned channels may be processed, the monitoring period of a scanned channel is limited to a short duration, for example one second, and to take place at off-peak time in term of data traffic (for example once a day, at night, or at least after checking that the communication device is not currently receiving high amount of data, such as video data stream, from the access point). Steps 12 and 13 are now further detailed hereafter, according to various embodiments of the disclosure.

At step 12, the communication device determines the number of neighboring access points operating in the scanned channel SC. According to an embodiment, such a determination may be performed by analyzing a list of detected wireless networks obtained through the WiFi driver mentioned above, and possibly by filtering this list by using specific rules. According to a particular feature, the wireless networks list associated with the scanned channel SC is filtered using some mac addresses masks, so as to remove from the list duplicated access points having identical or similar BSSID. In that way, a same device (e.g. a WiFi router) operating more than one access point on the scanned channel SC is counted only as one single access point (i.e. as one single neighbor). Besides, if the scanned channel SC is the current channel CC, the access point to which the communication device is currently connected is not counted within the determined number of neighboring access points associated with the scanned channel SC.

At step 13, the communication device estimates the neighbor airtime occupancy associated with the scanned channel SC. According to an embodiment, such an estimation may be performed from radio statistics obtained through the WiFi driver mentioned above. More particularly, among others, the driver provides following metrics (either as raw data or as data directly derived from raw data) associated with the scanned channel SC:
- "obss": which represents the percentage of airtime occupied by data transmission from others Wi-Fi access points operating in the scanned channel SC (Overlapping Basic Service Sets); and
- "interf": which represents a percentage of airtime time that is classified as uncategorized interference, but that is assumed, in the context of the disclosure, to originate from the presence of neighboring access points.

The sum of these two values ("obss" + "interf") is thus considered, in the context of the disclosure and according to an embodiment, as the estimated neighbor airtime occupancy, since it is representative of an occupancy time (in percentage of time) due or assimilated to the presence of some neighboring access points.

According to an embodiment, estimating the neighbor airtime occupancy for the scanned channel further includes taking into account some statistics previously stored within the communication device, with respect to the scanned channel SC. In other words, instead of relying only on a one-time monitoring performed during a short duration scan of the scanned channel SC by the communication device furthermore currently operating in the current channel CC (which is likely to be different from the scanned channel SC), it is proposed to take into account, in addition and when available, radio statistics previously stored in a channel usage history data structure CHU within the communication device. Indeed, because of possible previous channel switch, the access point to which the communication device is connected may have operated in a channel corresponding to the scanned channel SC in the past, and more particularly in a near past. In this case, statistics associated with these previous connections are retrieved from the channel usage history data structure (which may be formed by one or more log files or by a database for example), and analyzed to obtain an average neighbor airtime occupancy associated with at least one of these previous connections over the scanned channel SC. According to a particular feature of this embodiment, the neighbor airtime occupancy statistics taken into account for computing the average neighbor airtime occupancy are those associated, within the channel usage history data structure CHU, with a number of neighboring access points which is equal to the number of neighboring access points determined at step 12 (in such a case, it is assumed that step 12 is carried out before step 13).

According to this embodiment, and in order to consider the worst-case scenario when afterwards computing a quality score the scanned channel SC, the estimated neighbor airtime occupancy for the scanned channel is then set to the maximum value between:
- the average neighbor airtime occupancy retrieved from the channel usage history data structure; and
- the estimated neighbor airtime occupancy computed from the pieces of data delivered by the WiFi driver (i.e. the sum "obss"+"interf") during the monitoring period of the scanned channel SC.

According to an embodiment, when the scanned channel SC is an extended-bandwidth WiFi channel formed by bonding together a plurality of adjacent WiFi channels of the predetermined WiFi frequency band:
- at step 12, the number of neighboring access points associated with the scanned channel is determined as the sum of the number of neighboring access points associated with each channel of the plurality of adjacent WiFi channels bonded to form the scanned channel; and
- at step 13, the neighbor airtime occupancy associated with the scanned channel is estimated as the maximum value among the estimated neighbor airtime occupancy values associated with each channel of the plurality of adjacent WiFi channels bonded to form the scanned channel.

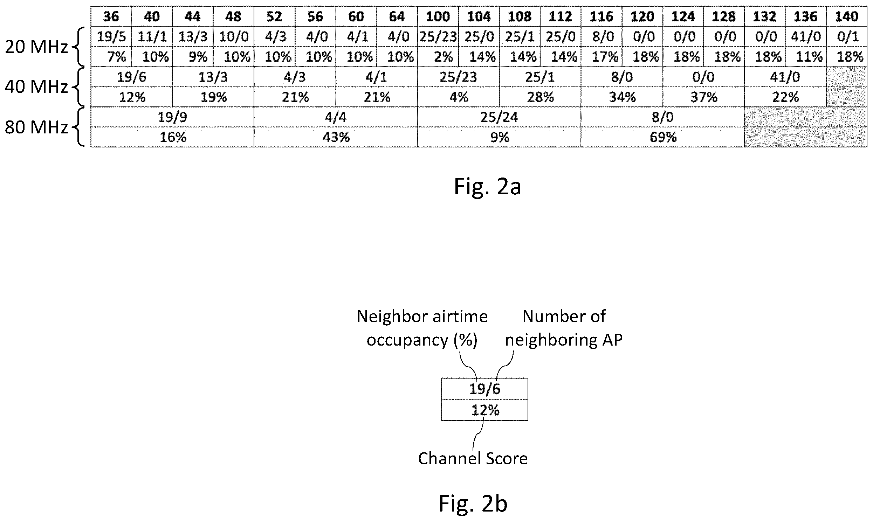

Such an embodiment is illustrated in relation with **figure 2a** and **figure 2b** showing some example values computed for WiFi channels within the 5 GHz WiFi frequency band: the determined number of neighboring access points and the estimated neighbor airtime occupancy associated with a 40 MHz or a 80 MHz bandwidth channel are set respectively to the sum of the number of neighboring access points and to the maximum value of neighbor airtime occupancy values associated with all of the 20 MHz bandwidth adjacent channels combined to form the extended-bandwidth channel (the values associated with the 20 MHz bandwidth channels being for example already computed according to one of the techniques already introduced with relation to previously described embodiments). For example, the following values are set for the 40 MHz bandwidth channel 36-40:
- 6 neighboring access points (5 for the 20 MHz bandwidth channel 36 and 1 for the 20 MHz bandwidth channel 40);
- 19% of estimated neighbor airtime occupancy (maximum value between the 19% of estimated neighbor airtime occupancy associated with the 20 MHz bandwidth channel 36 and the 11% of estimated neighbor airtime occupancy associated with the 20 MHz bandwidth channel 40).

Unless otherwise described, steps 11, 12 and 13 may be processed in parallel or one after the other, whatever the order.

At step 14, a score representative of the quality of the scanned channel SC is computed, as a function of scanned channel characteristics outputted at steps 11, 12 and 13, namely:
- the obtained bandwidth;
- the obtained maximum effective isotropic radiated power;
- the determined number of neighboring access points operating in the same channel;
- the estimated neighbor airtime occupancy.

More particularly, according to an embodiment, the score is computed in such a way that wider channel bandwidth (meaning higher data rate) and higher maximum effective isotropic radiated power have a positive impact on the computed quality score, whereas higher number of neighboring access points and higher estimated neighbor airtime occupancy have a negative impact on the computed quality score.

An example of algorithm for computing a quality score associated with a scanned channel SC within the 5 GHz frequency band is provided below.

```
 #Initialize the score depending on SC bandwidth SC_BW
       if (SC_BW == 80MHz) then score = 400
       else if (SC_BW == 40MHz) then score = 200
       else if (SC_BW == 20MHz) then score = 100
       #Integrate SC maximum EIRP (SC_EIRP) impact
       if (CC_SWITCH_BENEF == true and SC_EIRP == 30dBm)
              then score = score * 2
       else if (CC_SWITCH_BENEF == false and SC_EIRP == 30dBm)
              then score = score * 1.5
              #Integrate neighboring access points count (SC_APnb) impact
       if (SC_APnb > 4) then score = score * (4 / SC_APnb)
       #Integrate occupancy neighbor airtime occupancy (SC_OCC) impact
       score = score * (100% - SC_OCC)
       #Normalize the score to fall in the range [0%-100%]
       score = score / 800
```

As it can be note from this exemplary algorithm, various embodiments (that may be employed in any combination or sub-combination) may be implemented when computing the score representative of the quality of the scanned channel SC. More particularly:
- according to an embodiment, the scanned channel bandwidth is used to initialize the score to an initial value, higher initial value being set for wider bandwidth;
- according to an embodiment, the computing includes applying a score penalty to the score if the number of neighboring access points is above a predetermined number threshold (in the above exemplary algorithm, this threshold is set to 4), and the penalty may be proportional to the determined number of neighboring access points;
- according to an embodiment, the score is multiplied by a multiplying factor strictly greater than 1 if the scanned channel is a channel allowed to transmit at higher power than some other channel of the predetermined WiFi frequency band;
- according to an embodiment, the score is inversely proportional to the estimated neighbor airtime occupancy;
- according to an embodiment, the score is normalized (in the above exemplary algorithm, the score is normalized to be between 0% and 100%, the maximum score of 100% corresponding to a 80 MHz bandwidth channel having a maximum EIRP of 30 dBm, a determined number of neighboring access points lower than or equal to 4, and a neighbor airtime occupancy estimated to 0%).

According to an embodiment, computing the score associated with the scanned channel SC further takes into account some metrics associated with the current channel CC. More particularly, at an optional step 15, the maximum effective isotropic radiated power associated with the current channel CC and a current received signal strength indicator (RSSI) representative of the power of the signal received by the communication device through the current channel (CC) are analyzed so as to estimate whether or not there would be an expected benefit to switch from the current channel CC to a channel emitting with more power.

For example, a flag representative of such a benefit may be set to "true" if one of the two following conditions is true (meaning that there is an expected benefit), or "false" otherwise (meaning that there is no expected benefit):
- the current channel EIRP is equal to 30 dBm and the current RSSI at the communication device is lower than or equal to -60 dBm; or
- the current channel EIRP is equal to 23 dBm and the current RSSI at the communication device is lower than or equal to -67 dBm.

These conditions may be seen as mirror conditions (one for high power channels, one for low power channels) used to evaluate if the communication device is considered as far from the access point, in which case there is an expected benefit to switch to a more powerful channel and the flag is set to "true".

On course, condition given above are only illustrative examples, and should be adapted depending on local regulations regarding the maximum EIRP associated with WiFi channels (regulations are not the same is every country).

The value of the flag (named CC_SWITCH_BENEF in the exemplary algorithm presented above) can then be taken into account when computing the score representative of the quality of the scanned channel SC.

For example, if the communication device is considered as far from the access point (CC_SWITCH_BENEF set to "true"), and if the scanned channel SC is a high power emitting channel (SC_EIRP = 30 dBm), one can considered that there is a direct (i.e. high) expected benefit to switch to scanned channel SC. The scanned channel score is then impacted accordingly (by being multiply by 2 in the exemplary example).

If the communication device is considered as already close enough from the access point (CC_SWITCH_BENEF set to "false") and if the scanned channel SC is a high power emitting channel (SC_EIRP = 30 dBm), the communication device may not benefit directly of a switch to scanned channel SC. However, other devices in the same wireless network may possibly benefit of such a switch, and as a consequence free up airtime for the communication device. One can thus consider that there is an indirect (i.e. medium) expected benefit to switch to scanned channel SC. The scanned channel score is then impacted accordingly (by being multiply by 1,5 in the exemplary example, i.e by being multiplied by a factor strictly greater than 1 but lower than the multiplying factor of 2 applied when a direct benefit is expected).

In this embodiment, the score representative of the quality of the scanned channel can be considered as a relative score, since it doesn't depend only on scanned channel SC characteristics, but also on some of the current channel CC characteristics. Such an embodiment is of interest, since it allows better evaluating the potential benefit to switch from current channel CC to scanned channel CC, from the perspective of the communication device.

Figures 2a and 2b already introduced show some example of quality scores computed according to an embodiment of the proposed technique, for all channels of the 5 GHz frequency band, thus delivering a channel quality scores map for the whole frequency band.

The computed scores may then be used in a second phase, for evaluating a benefit (or an expected benefit), from the communication device perspective, of configuring the access point to operate on another channel than the current channel CC.

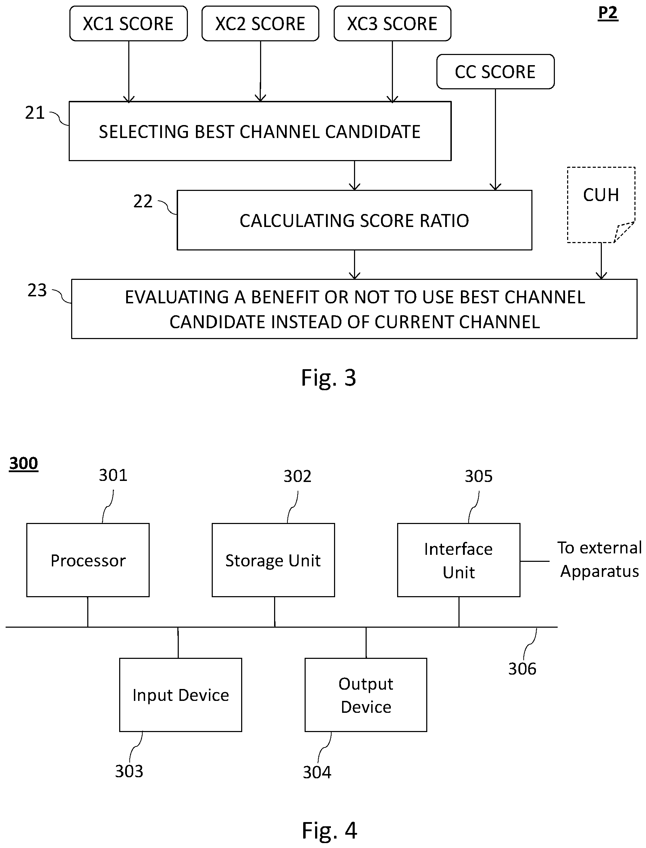

Such a second phase P2 is illustrated on the flow chart depicted on **figure 3****,** in an embodiment of the disclosure. It assumed that a score representative of the quality of the current channel CC and a score representative of the quality of at least one other WiFi channel (e.g. XC1, XC2, XC3, etc.) within the predetermined WiFi frequency band, called a candidate channel, have already been computed during the first phase P1 of the proposed technique.

At step 21, the communication device determines the channel having the best quality score, referred to as the best candidate channel, among the candidate channels (XC1, XC2, XC3).

At step 22, the communication device then calculates a score ratio between the best candidate channel score and the current channel score.

This score ratio is used at step 23 by the communication device, to evaluate whether or not there is an expected benefit to use the best candidate channel instead of the current channel for the connection between the communication device and the access point, and to deliver a resulting piece of information.

For example, if the score ratio is above a predetermined threshold (150 for example), an information may be rendered on the communication device to advice a user to configure the access point to operate on the best candidate channel, instead of using current channel CC. According to an embodiment, other metrics associated with the current channel may be used along with the ratio score to identify possible weaknesses in the current WiFi link and eventually provides recommendation for improving it. For example, these complementary metrics include an average data rate measured for the connection between the communication device and the access point on the current channel, an average neighbor airtime occupancy for the current channel, and/or an average quality of service (QoS) associated with the connection between the communication device and the access point on the current channel. These metrics may be obtained or computed from a channel usage data structure such as the one already described in relation with step 13 for example (or from another data structure stored within or accessible from the communication device). They may be representative of an average state of the WiFi link through the current channel over a given time period, such as for example the last three days or the last week (assuming that no channel switch has occurred during that period), or the past period up to the last channel switch performed on the access point for example. The average QoS may be an average of some quality scores associated with the current channel, computed according to the present technique on a regular time basis (e.g. every day over the given time period). Alternatively, it may be an average of values of a composite QoS indicator computed from raw data obtained through a WiFi driver or directly from the physical layer, at the communication device, such as the *"*PHY rate*"* of the last received data frame by the communication device, the remaining available time for transmission "Tx opportunity" and the percentage of retransmission "Frame retries". By comparing these complementary metrics with some predetermined thresholds, other information may be provided to the user of the communication device (and possible associated recommendations), such as for example identifying whether or not the communication device appears to be too far from the access point (and advise the user to bring the communication device closer to the access point, if possible), and/or warning the user if the current channel appears to be particularly crowded (i.e. used by a lot of neighboring access points, and for example advice the user to configure the access point to operate on another channel, if one with a better quality score has been found).

According to an embodiment, when the communication device has more than one antenna, the proposed technique further includes an antenna diagnostic, including delivering a piece of data representative of a probability of non-optimal positioning of the communication device and/or of a probability of hardware issue on the communication device, as a function of pieces of data representative of a set of received signal strength indicator (RSSI) values measured at each WiFi antenna of the communication device. Such RSSI values may be retrieved, for example, from a channel usage history data structure as already described, or from another data structure. More particularly, it is proposed to infer from the comparison of various average values either a bad or inappropriate positioning of the communication device or a possible hardware issue on one or more antenna of the communication device. For example, assuming that the communication device has four antennas, with a given number of RSSI value samples available for each antenna (values measured on a regulartime basis, over a predetermined time period), the following metrics are calculated and compared to predetermined thresholds ("avg" stands for "average"):
- delta_avg_RSSI = max(RSSI1avg, RSSI2avg, RSSI3avg, RSSI4avg) minus min(RSSI1avg, RSSI2avg, RSSI3avg, RSSI4avg); and
- avg_delta_RSSI = average (max(RSSI1, RSSI2, RSSI3, RSSI4) minus min(RSSI1, RSSI2, RSSI3, RSSI4)).

It is then considered, for example, that:
- a "delta_avg_RSSI" value greater than or equal to 15 dBm indicates a possible misconnection of at least one antenna of the communication device; and
- an "avg_delta_RSSI" value greater than or equal to 8 dBm may indicates a possible inappropriate positioning of the communication device (e.g. the device may be too close to a wall or corner of a room).

As discussed above, the proposed technique thus offers a device-centric solution for performing a rather exhaustive diagnostic of a WiFi current channel from the communication device perspective, allowing identifying and solving most of the issues. Besides, it allows comparing the quality of the WiFi channels operable on the access point, making it possible to automatically identify a channel likely to provide a better wireless connection than the current one between the communication device and the access point (e.g. in terms of data rate, stability, availability, etc.). Such a solution, although not as complete as access point centric full Wi-Fi management solutions, in cheap in comparison. The diagnostic may be performed once per day, or on user/operator demand for example.

The result of the diagnostic and associated recommendations can be formatted and stored under various format. For example, it may take the form of a JSON or XML formatted file, easily readable and computer-processable. The result of the diagnostic can be rendered on the communication device itself, or/and be transmitted to another device. For example, it can be transmitted to a remote server for rendering on a dashboard integrated in a backend service (allowing an operator to take preventive action based on the diagnostic, for example), or used locally for rendering within a dedicated application (allowing a user to have a better understanding of possible WiFi link issues and hints to solve them).

**Figure 4** shows a schematic block diagram illustrating an example of a communication device 300, according to an embodiment of the present disclosure. The communication device is connected to a WiFi access point operating in a given channel, called a current channel, within a predetermined WiFi frequency band. In an embodiment, such a device 300 may be a standalone device that can be connected to a home network or a local area network, such as a set-top box provided by an operator or a television set for example. It should be noted that the implementation of the proposed technique in a set-top box (or in a television set) is of particular interest, since it is typically the kind of device needing good WiFi link quality so as to be able to handle IPTV UDP/Multicast communication in suitable conditions (the lack of which being likely to create a deceptive effect on a user, with a risk of a change of operator).

The device 300 includes a processor 301, a storage unit 302, an input device 303, an output device 304, and an interface unit 305 which are connected by a bus 306. Of course, constituent elements of the device 300 may be connected by a connection other than a bus connection using the bus 306.

The processor 301 controls operations of the monitoring device 300. The storage unit 302 stores at least one program to be executed by the processor 301, and various data, including for example parameters used by computations performed by the processor 301, intermediate data of computations performed by the processor 301 such as the scanned channel characteristics (bandwidth, maximum EIRP, number of neighboring access point, estimated neighbor airtime occupancy) obtained, determined or estimated by the device 300, and so on. The processor 301 is formed by any known and suitable hardware, or software, or a combination of hardware and software. For example, the processor 301 is formed by dedicated hardware such as a processing circuit, or by a programmable processing unit such as a CPU (Central Processing Unit) that executes a program stored in a memory thereof.

The storage unit 302 is formed by any suitable storage or means capable of storing the program, data, or the like in a computer-readable manner. Examples of the storage unit 302 include non-transitory computer-readable storage media such as semiconductor memory devices, and magnetic, optical, or magnetooptical recording media loaded into a read and write unit. The program causes the processor 301 to perform a method for evaluating the quality of a channel operable by a WiFi access point for establishing a WiFi connection with a communication device according to an embodiment of the present disclosure as described previously. More particularly, the program causes the processor 301 to compute a score representative of the quality of at least one channel within a predetermined WiFi frequency band, so that an interest to switch to such a channel may be evaluated from the communication device perspective.

The input device 303 is used to obtain the raw values associated with the current and/or scanned channel. The input device may take the form of a WiFi driver embedded in the communication device.

The output device 304 is formed for example by a processing unit configured to take decision or inform on receiving conditions as a function of a set of quality scores computed for various channels of the predetermined WiFi frequency band.

The interface unit 305 provides an interface between the communication device 300 and an external apparatus. The interface unit 305 is typically WiFi interface allowing wireless communication with the external apparatus. For example, the external apparatus may be an access point operated by a router.

Although only one processor 301 is shown on figure 4, it must be understood that such a processor may include different modules and units embodying the functions carried out by device 300 according to embodiments of the present disclosure, such as the unit previously described in relation with figure 1. These modules and units may also be embodied in several processors 301 communicating and co-operating with each other.

While the disclosure has been described with reference to exemplary embodiments, it is to be understood that the disclosure can be embodied in various forms, and is not to be limited to the examples discussed above.

## Claims

1. A method for evaluating the quality of a channel operable by a WiFi access point for establishing a WiFi connection with a communication device, the communication device being connected to the access point on a given WiFi channel, called a current channel (CC), within a predetermined WiFi frequency band, the method being implemented by the communication device, **wherein** the method comprises a first phase for computing a score representative of a channel quality for at least one WiFi channel, called a scanned channel (SC), within the predetermined WiFi frequency band, the first phase comprising at least one iteration of:
obtaining (11) a scanned channel bandwidth and a maximum effective isotropic radiated power associated with the scanned channel;
determining (12) a number of neighboring access points operating in the scanned channel;
estimating (13) a neighbor airtime occupancy for the scanned channel; and
computing (14) the score representative of a channel quality for the scanned channel (SC), as a function of:
the obtained bandwidth;
the obtained maximum effective isotropic radiated power;
the determined number of neighboring access points; and
the estimated neighbor airtime occupancy.

2. The method according to claim 1, **wherein** determining (12) the number of neighboring access points using the scanned channel and estimating (13) the neighbor airtime occupancy for the scanned channel are performed from pieces of data delivered by a WiFi driver during a monitoring period of the scanned channel.

3. The method according to claim 2, **wherein** the estimated neighbor airtime occupancy is equal to the sum of an overlapping basic service set value and an interference value obtained or inferred from the pieces of data delivered by the WiFi driver during the monitoring period of the scanned channel.

4. The method according to claim 2, **wherein** estimating (13) the neighbor airtime occupancy for the scanned channel further comprises:
analyzing a channel usage history data structure (CUH) stored within the communication device to identify at least one previous connection of the communication device to the access point on the scanned channel and retrieve an average neighbor airtime occupancy associated with the at least one previous connection;
setting the estimated neighbor airtime occupancy for the scanned channel to the maximum value between:
the average neighbor airtime occupancy retrieved from the channel usage history data structure (CUH); and
the estimated neighbor airtime occupancy computed from the pieces of data delivered by the WiFi driver during the monitoring period of the scanned channel.

5. The method according to claim 1, **wherein** the scanned channel is an extended-bandwidth channel formed by bonding together a plurality of adjacent channels of the predetermined WiFi frequency band and wherein:
the number of neighboring access points associated with the scanned channel is determined as the sum of the number of neighboring access points associated with each channel of the plurality of adjacent channels bonded to form the scanned channel; and
the neighbor airtime occupancy associated with the scanned channel is estimated as the maximum value among the estimated neighbor airtime occupancy values associated with each channel of the plurality of adjacent channels bonded to form the scanned channel.

6. The method according to claim 1, **wherein** computing the score for the scanned channel comprises applying a score penalty to the score if the determined number of neighboring access points is above a predetermined threshold number, said score penalty being proportional to the determined number of neighboring access points.

7. The method according to claim 1, **wherein** computing the score for the scanned channel further comprises taking into account a maximum effective isotropic radiated power associated with the current channel (CC) and a current received signal strength indicator representative of the power of the signal received by the communication device on the current channel (CC).

8. The method according to claim 1, **wherein** a score is computed for each channel of the predetermined WiFi frequency band, including the current channel.

9. The method according to claim 1, **wherein** a score representative of the quality of the current channel (CC) and a score representative of the quality of at least one other channel within the predetermined WiFi frequency band, called a candidate channel (XC1, XC2, XC3), are computed in the first phase, **and wherein** the method comprises a second phase for evaluating a benefit of a channel switch, the second phase comprising:
determining (21) the channel having the best score, called the best candidate channel, among the at least one candidate channel;
calculating (22) a score ratio between the best candidate channel score and the current channel score; and
delivering (23) a piece of data representative of a benefit or not to use the best candidate channel instead of the current channel for the connection between the communication device and the access point, as a function of the calculated score ratio.

10. The method according to claim 9, **wherein** delivering a piece of data representative of a benefit or not to use the best candidate channel instead of the current channel further takes into account at least one characteristic associated with the connection between the communication device and the access point on the current channel.

11. The method according to claim 10, **wherein** the at least one characteristic belongs to the group comprising:
an average data rate measured for the connection between the communication device and the access point on the current channel;
an average neighbor airtime occupancy for the current channel; and
an average quality of service associated with the connection between the communication device and the access point on the current channel.

12. The method according to claim 10, **wherein** the communication device has a plurality of WiFi antenna, **and wherein** the second phase further comprises delivering a piece of data representative of a probability of non-optimal positioning of the communication device and/or of a probability of hardware issue on the communication device, as a function of pieces of data representative of a set of received signal strength indicator values measured at each WiFi antenna of the communication device.

13. A communication device connected to a WiFi access point on a given WiFi channel, called a current channel (CC), within a predetermined WiFi frequency band, **wherein** the communication device comprises at least one processor configured for computing a score representative of a channel quality for at least one WiFi channel, called a scanned channel (SC), within the predetermined WiFi frequency band, by:
obtaining a scanned channel bandwidth and a maximum effective isotropic radiated power associated with the scanned channel;
determining a number of neighboring access points operating in the scanned channel;
estimating a neighbor airtime occupancy for the scanned channel; and
computing the score representative of a channel quality for the scanned channel (SC), as a function of:
the obtained bandwidth;
the obtained maximum effective isotropic radiated power;
the determined number of neighboring access points; and
the estimated neighbor airtime occupancy.

14. A computer program product comprising instructions which, when the program is executed by a computer, cause the computer to carry out the method according to any one of claims 1 to 12.

15. A computer-readable medium comprising instructions which, when the program is executed by a computer, cause the computer to carry out the method according to any one of claims 1 to 12.

## Patentansprüche

1. Verfahren zum Bewerten der Qualität eines Kanals, der durch einen WiFi-Zugangspunkt zum Aufbauen einer WiFi-Verbindung mit einer Kommunikationsvorrichtung betreibbar ist, wobei die Kommunikationsvorrichtung mit dem Zugangspunkt auf einem gegebenen WiFi-Kanal, ein gegenwärtiger Kanal (CC) genannt, innerhalb eines vorgegebenen WiFi-Frequenzbands verbunden ist, wobei das Verfahren durch die Kommunikationsvorrichtung implementiert wird, **wobei** das Verfahren eine erste Phase zum Berechnen einer Bewertung, die eine Kanalqualität für mindestens einen WiFi-Kanal, ein abgetasteter Kanal (SC) genannt, innerhalb des vorgegebenen WiFi-Frequenzbands repräsentiert, umfasst, wobei die erste Phase mindestens eine Iteration umfasst von:
Erhalten (11) einer abgetasteten Kanalbandbreite und
einer maximalen effektiven isotrop abgestrahlten Leistung, die dem abgetasteten Kanal zugeordnet ist;
Bestimmen (12) einer Anzahl von Nachbarzugangspunkten, die in dem abgetasteten Kanal arbeiten;
Schätzen (13) einer Nachbarsendezeitbelegung für den abgetasteten Kanal; und
Berechnen (14) der Bewertung, die eine Kanalqualität für den abgetasteten Kanal (SC) repräsentiert, als eine Funktion:
der erhaltenen Bandbreite;
der erhaltenen maximalen effektiven isotrop abgestrahlten Leistung;
der bestimmten Anzahl von Nachbarzugangspunkten; und
der geschätzten Nachbarsendezeitbelegung.

2. Verfahren nach Anspruch 1, **wobei** das Bestimmen (12) der Anzahl von Nachbarzugangspunkten unter Verwendung des abgetasteten Kanals und das Schätzen (13) der Nachbarsendezeitbelegung für den abgetasteten Kanal von Datenelementen ausgeführt werden, die während einer Überwachungszeitdauer des abgetasteten Signals durch einen WiFi-Treiber geliefert werden.

3. Verfahren nach Anspruch 2, **wobei** die geschätzte Nachbarsendezeitbelegung gleich der Summe eines überlappenden Basis-Service-Set-Werts und eines Störungswerts, der aus den Datenelementen, die durch den WiFi-Treiber während der Überwachungszeitdauer des abgetasteten Kanals geliefert werden, erhalten oder gefolgert wird, ist.

4. Verfahren nach Anspruch 2, **wobei** das Schätzen (13) der Nachbarsendezeitbelegung für den abgetasteten Kanal ferner umfasst:
Analysieren einer innerhalb der Kommunikationsvorrichtung gespeicherten Kanalnutzungsverlaufs-Datenstruktur (CUH), um mindestens eine vorhergehende Verbindung der Kommunikationsvorrichtung mit dem Zugangspunkt auf dem abgetasteten Kanal zu identifizieren und eine durchschnittliche Nachbarsendezeitbelegung, die der mindestens einen vorhergehenden Verbindung zugeordnet ist, wiederzugewinnen;
Einstellen der geschätzten Nachbarsendezeitbelegung für den abgetasteten Kanal auf den Maximalwert zwischen:
der aus der Kanalnutzungsverlaufs-Datenstruktur (CUH) wiedergewonnenen durchschnittlichen Nachbarsendezeitbelegung; und
der von den durch den WiFi-Treiber während der Überwachungszeitdauer des abgetasteten Signals gelieferten Datenelementen berechneten geschätzten Nachbarsendezeitbelegung.

5. Verfahren nach Anspruch 1, **wobei** der abgetastete Kanal ein Kanal mit erweiterter Bandbreite ist, der dadurch gebildet wird, dass mehrere angrenzende Kanäle des vorgegebenen WiFi-Frequenzbands miteinander verbunden werden, und wobei:
die Anzahl von Nachbarzugangspunkten, die dem abgetasteten Kanal zugeordnet sind, als die Summe der Nachbarzugangspunkte, die jedem Kanal der mehreren angrenzenden Kanäle zugeordnet sind, die verbunden sind, um den abgetasteten Kanal zu bilden, bestimmt wird; und
die Nachbarsendezeitbelegung, die dem abgetasteten Kanal zugeordnet ist, als der Maximalwert unter den geschätzten Nachbarsendezeitbelegungswerten, die jedem Kanal der mehreren angrenzenden Kanäle, die verbunden worden sind, um den abgetasteten Kanal zu bilden, zugeordnet sind, geschätzt wird.

6. Verfahren nach Anspruch 1, **wobei** das Berechnen der Bewertung für den abgetasteten Kanal das Anwenden einer Bewertungsstrafe auf die Bewertung umfasst, falls die bestimmte Anzahl von Nachbarzugangspunkten über einer vorgegebenen Schwellenanzahl liegt, wobei die Bewertungsstrafe proportional zu der bestimmten Anzahl von Nachbarzugangspunkten ist.

7. Verfahren nach Anspruch 1, **wobei** das Berechnen der Bewertung für den abgetasteten Kanal ferner das Berücksichtigen einer maximalen effektiven isotrop abgestrahlten Leistung, die dem gegenwärtigen Kanal (CC) zugeordnet ist, und eines gegenwärtigen Empfangssignalstärkeindikators, der die Leistung des durch die Kommunikationsvorrichtung auf dem gegenwärtigen Kanal (CC) empfangenen Signals repräsentiert, umfasst.

8. Verfahren nach Anspruch 1, **wobei** für jeden Kanal des vorgegebenen WiFi-Frequenzbands, einschließlich des gegenwärtigen Kanals, eine Bewertung berechnet wird.

9. Verfahren nach Anspruch 1, **wobei** in der ersten Phase eine Bewertung, die die Qualität des gegenwärtigen Kanals (CC) repräsentiert, und eine Bewertung, die die Qualität mindestens eines anderen Kanals innerhalb des vorgegebenen WiFi-Frequenzbands, ein Kandidatenkanal (XC1, XC2, XC3) genannt, repräsentiert, berechnet werden, **und wobei** das Verfahren eine zweite Phase zum Bewerten eines Vorteils eines Kanalschalters umfasst, wobei die zweite Phase umfasst:
Bestimmen (21) des Kanals mit der besten Bewertung, der beste Kandidatenkanal genannt, unter den mindestens einen Kandidatenkanälen;
Berechnen (22) eines Bewertungsverhältnisses zwischen der besten Kandidatenkanalbewertung und der gegenwärtigen Kanalbewertung; und
Liefern (23) eines Datenelements, das einen Vorteil repräsentiert, für die Verbindung zwischen der Kommunikationsvorrichtung und dem Zugangspunkt anstelle des gegenwärtigen Kanals den besten Kandidatenkanal zu verwenden, als eine Funktion des berechneten Bewertungsverhältnisses.

10. Verfahren nach Anspruch 9, **wobei** das Liefern eines Datenelements, das einen Vorteil repräsentiert, anstelle des gegenwärtigen Kanals den besten Kandidatenkanal zu verwenden, ferner mindestens eine Charakteristik berücksichtigt, die der Verbindung zwischen der Kommunikationsvorrichtung und dem Zugangspunkt auf dem gegenwärtigen Kanal zugeordnet ist.

11. Verfahren nach Anspruch 10, **wobei** die mindestens eine Charakteristik zu der Gruppe gehört, die umfasst:
eine durchschnittliche Datenrate, die für die Verbindung zwischen der Kommunikationsvorrichtung und dem Zugangspunkt auf dem gegenwärtigen Kanal gemessen wird;
eine durchschnittliche Nachbarsendezeitbelegung für den gegenwärtigen Kanal; und
eine durchschnittliche Dienstqualität, die der Verbindung zwischen der Kommunikationsvorrichtung und dem Zugangspunkt auf dem gegenwärtigen Kanal zugeordnet ist.

12. Verfahren nach Anspruch 10, **wobei** die Kommunikationsvorrichtung mehrere WiFi-Antennen aufweist, **und wobei** die zweite Phase ferner das Liefern eines Datenelements, das eine Wahrscheinlichkeit einer nichtoptimalen Positionierung der Kommunikationsvorrichtung und/oder eine Wahrscheinlichkeit eines Hardwareproblems in der Kommunikationsvorrichtung als eine Funktion von Datenelementen, die einen Satz von bei jeder WiFi-Antenne der Kommunikationsvorrichtung gemessenen Empfangssignalstärke-Indikatorwerten repräsentieren, repräsentiert, umfasst.

13. Kommunikationsvorrichtung, die mit einem WiFi-Zugangspunkt auf einem gegebenen WiFi-Kanal, ein gegenwärtiger Kanal (CC) genannt, innerhalb eines vorgegebenen WiFi-Frequenzbands verbunden ist, **wobei** die Kommunikationsvorrichtung mindestens einen Prozessor umfasst, der dafür konfiguriert ist, eine Bewertung zu berechnen, die eine Kanalqualität für mindestens einen WiFi-Kanal, ein abgetasteter Kanal (SC) genannt, innerhalb des vorgegebenen WiFi-Frequenzbands repräsentiert, durch:
Erhalten einer abgetasteten Kanalbandbreite und einer maximalen effektiven isotrop abgestrahlten Leistung, die dem abgetasteten Kanal zugeordnet ist;
Bestimmen einer Anzahl von Nachbarzugangspunkten, die in dem abgetasteten Kanal arbeiten;
Schätzen einer Nachbarsendezeitbelegung für den abgetasteten Kanal; und
Berechnen der Bewertung, die eine Kanalqualität für den abgetasteten Kanal (SC) repräsentiert, als eine Funktion:
der erhaltenen Bandbreite;
der erhaltenen maximalen effektiven isotrop abgestrahlten Leistung;
der bestimmten Anzahl von Nachbarzugangspunkten; und
der geschätzten Nachbarsendezeitbelegung.

14. Computerprogrammprodukt, das Anweisungen umfasst, die, wenn das Programm durch einen Computer ausgeführt wird, veranlassen, dass der Computer das Verfahren nach einem der Ansprüche 1 bis 12 ausführt.

15. Computerlesbares Medium, das Anweisungen umfasst, die, wenn das Programm durch einen Computer ausgeführt wird, veranlassen, dass der Computer das Verfahren nach einem der Ansprüche 1 bis 12 ausführt.

## Revendications

1. Procédé d'évaluation de la qualité d'un canal fonctionnant à l'aide d'un point d'accès WiFi pour établir une connexion WiFi avec un dispositif de communication, le dispositif de communication étant connecté au point d'accès sur un canal WiFi donné, appelé canal courant (CC), dans une bande de fréquence WiFi prédéterminée, le procédé étant mis en œuvre par le dispositif de communication, dans lequel le procédé comprend une première phase pour calculer un score représentatif d'une qualité de canal pour au moins un canal WiFi, appelé canal balayé (SC), dans la bande de fréquence WiFi prédéterminée, la première phase comprenant au moins une itération suivante :
l'obtention (11) d'une largeur de bande de canal balayé et d'une puissance rayonnée isotrope efficace maximale associée au canal balayé ;
la détermination (12) d'un nombre de points d'accès voisins fonctionnant dans le canal balayé ;
l'estimation (13) d'un taux d'occupation de temps d'émission voisin pour le canal balayé ; et
le calcul (14) du score représentatif d'une qualité de canal pour le canal balayé (SC), en fonction de :
la largeur de bande obtenue ;
la puissance rayonnée isotrope efficace maximale obtenue ;
le nombre déterminé de points d'accès voisins ; et
le taux d'occupation de temps d'émission voisin estimé.

2. Procédé selon la revendication 1, dans lequel la détermination (12) du nombre de points d'accès voisins utilisant le canal balayé et l'estimation (13) du taux d'occupation de temps d'émission voisin pour le canal balayé sont réalisés à partir de données délivrées par un pilote WiFi pendant une période de surveillance du canal balayé.

3. Procédé selon la revendication 2, dans lequel le taux d'occupation de temps d'émission voisin estimé est égal à la somme d'une valeur de consigne de service de base superposée et d'une valeur d'interférence obtenues ou déduites des données délivrées par le pilote WiFi pendant la période de surveillance du canal balayé.

4. Procédé selon la revendication 2, dans lequel l'estimation (13) du taux d'occupation de temps d'émission voisin pour le canal balayé comprend en outre :
l'analyse d'une structure de données d'historique d'utilisation de canal (CUH) stockée dans le dispositif de communication pour identifier au moins une connexion précédente du dispositif de communication au point d'accès sur le canal balayé et récupérer un taux d'occupation de temps d'émission voisin moyen associé à l'au moins une connexion précédente ;
l'établissement du taux d'occupation de temps d'émission voisin estimé pour le canal balayé à la valeur maximale entre :
le taux d'occupation de temps d'émission voisin moyen récupéré à partir de la structure de données d'historique d'utilisation de canal (CUH) ; et
le taux d'occupation de temps d'émission voisin estimé calculé à partir des données délivrées par le pilote WiFi pendant la période de surveillance du canal balayé.

5. Procédé selon la revendication 1, dans lequel le canal balayé est un canal à largeur de bande étendue formé en reliant ensemble une pluralité de canaux adjacents de la bande de fréquence Wi-Fi prédéterminée et dans lequel :
le nombre de points d'accès voisins associés au canal balayé est déterminé comme la somme du nombre de points d'accès voisins associés à chaque canal de la pluralité de canaux adjacents reliés pour former le canal balayé ; et
le taux d'occupation de temps d'émission voisin associé au canal balayé est estimé comme la valeur maximale parmi les valeurs de taux d'occupation de temps d'émission voisin estimées associées à chaque canal de la pluralité de canaux adjacents reliés pour former le canal balayé.

6. Procédé selon la revendication 1, dans lequel le calcul du score pour le canal balayé comprend l'application d'une pénalité de score au score si le nombre déterminé de points d'accès voisins est supérieur à un nombre seuil prédéterminé, ladite pénalité de score étant proportionnelle au nombre déterminé de points d'accès voisins.

7. Procédé selon la revendication 1, dans lequel le calcul du score pour le canal balayé comprend en outre la prise en compte d'une puissance rayonnée isotrope efficace maximale associée au canal courant (CC) et d'un indicateur d'intensité de signal reçu courant représentatif de la puissance du signal reçu par le dispositif de communication sur le canal courant (CC).

8. Procédé selon la revendication 1, dans lequel un score est calculé pour chaque canal de la bande de fréquence Wi-Fi prédéterminée, y compris le canal courant.

9. Procédé selon la revendication 1, dans lequel un score représentatif de la qualité du canal courant (CC) et un score représentatif de la qualité d'au moins un autre canal dans la bande de fréquence WiFi prédéterminée, appelé un canal candidat (XC1, XC2, XC3), sont calculés dans la première phase, et dans lequel le procédé comprend une deuxième phase pour évaluer un bénéfice d'une permutation de canal, la deuxième phase comprenant :
la détermination (21) du canal ayant le meilleur score, appelé le meilleur canal candidat, parmi l'au moins un canal candidat ;
le calcul (22) d'un rapport de score entre le score du meilleur canal candidat et le score du canal courant ; et
la fourniture (23) de données représentatives d'un bénéfice ou non d'utiliser le meilleur canal candidat à la place du canal courant pour la connexion entre le dispositif de communication et le point d'accès, en fonction du rapport de score calculé.

10. Procédé selon la revendication 9, dans lequel la fourniture de données représentatives d'un bénéfice ou non d'utiliser le meilleur canal candidat à la place du canal courant prend en compte en outre au moins une caractéristique associée à la connexion entre le dispositif de communication et le point d'accès sur le canal courant.

11. Procédé selon la revendication 10, dans lequel l'au moins une caractéristique appartient au groupe comprenant :
un débit de données moyen mesuré pour la connexion entre le dispositif de communication et le point d'accès sur le canal courant ;
un taux d'occupation de temps d'émission voisin moyen pour le canal courant ; et
une qualité de service moyenne associée à la connexion entre le dispositif de communication et le point d'accès sur le canal courant.

12. Procédé selon la revendication 10, dans lequel le dispositif de communication a une pluralité d'antennes WiFi, et dans lequel la deuxième phase comprend en outre la fourniture d'une donnée représentative d'une probabilité d'un positionnement non optimal du dispositif de communication et/ou d'une probabilité de problème matériel sur le dispositif de communication, en fonction de donnée représentatives d'un ensemble de valeurs d'indicateur d'intensité de signal reçu mesurées au niveau de chaque antenne WiFi du dispositif de communication.

13. Dispositif de communication connecté à un point d'accès WiFi sur un canal WiFi donné, appelé canal courant (CC), dans une bande de fréquence WiFi prédéterminée, dans lequel le dispositif de communication comprend au moins un processeur configuré pour calculer un score représentatif d'une qualité de canal pour au moins un canal WiFi, appelé un canal balayé (SC), dans la bande de fréquence WiFi prédéterminée, par :
obtention d'une largeur de bande de canal balayé et d'une puissance rayonnée isotrope efficace maximale associée au canal balayé ;
détermination d'un nombre de points d'accès voisins fonctionnant dans le canal balayé ;
estimation d'un taux d'occupation de temps d'émission voisin pour le canal balayé ; et
calcul du score représentatif d'une qualité de canal pour le canal balayé (SC), en fonction de :
la largeur de bande obtenue ;
la puissance rayonnée isotrope efficace maximale obtenue ;
le nombre déterminé de points d'accès voisins ; et
le taux d'occupation de temps d'émission voisin estimé.

14. Produit de programme informatique comprenant des instructions qui, lorsque le programme est exécuté par un ordinateur, amènent l'ordinateur à effectuer le procédé selon l'une quelconque des revendications 1 à 12.

15. Support lisible par ordinateur comprenant des instructions qui, lorsque le programme est exécuté par un ordinateur, amènent l'ordinateur à effectuer le procédé selon l'une quelconque des revendications 1 à 12.
